# FASCICULE DE BREVET EUROPEEN

(11) **EP 3 105 424 B1**
(45) Date de publication et mention de la délivrance du brevet: **29.03.2023**
(21) Numéro de dépôt: 15706907.1
(22) Date de dépôt: 10.02.2015
(51) Int. Cl.: F01D 25/08, F02C 7/047, F02C 7/14

(54) **SYSTÈME D'ÉCHANGEUR DE CHALEUR**
WÄRMETAUSCHERSYSTEM
HEAT EXCHANGER SYSTEM

(30) Priorité: 11.02.2014 FR 1451057
(43) Date de publication de la demande: 21.12.2016
(73) Titulaire: Safran Power Units, 31200 Toulouse (FR)
(72) Inventeur: ROCHE, Amandine, F-31200 Toulouse (FR)
(74) Mandataire: Brevalex
(86) Numéro de dépôt international: PCT/FR2015/050316
(87) Numéro de publication internationale: WO 2015/121576

(56) Documents cités:
- EP-A1- 2 339 123
- EP-A2- 1 630 358
- EP-A2- 1 630 358
- EP-A2- 1 895 123
- EP-A2- 1 895 141
- GB-A- 626 571
- GB-A- 626 571
- US-A- 3 262 636
- US-A1- 2005 023 412

## Description

### DOMAINE TECHNIQUE

L'invention propose un système échangeur de chaleur pour une turbomachine d'aéronef comportant une entrée d'air radiale.

L'invention propose plus particulièrement un système échangeur de chaleur pour refroidir un fluide de lubrification et/ou de refroidissement d'équipements de la turbomachine, dans lequel la source froide de l'échangeur de chaleur est constituée par le débit d'air à l'entrée de la turbomachine.

### ÉTAT DE LA TECHNIQUE ANTÉRIEURE

Une turbomachine d'aéronef comporte une pluralité d'organes et d'équipements qui doivent être lubrifiés et/ou refroidis de manière constante lors du fonctionnement de la turbomachine.

Ces fonctions de lubrification et refroidissement sont assurées par un fluide lubrifiant qui est ainsi amené à s'échauffer.

Pour limiter la température de ce fluide, il est connu d'équiper la turbomachine avec un ou plusieurs dispositifs d'échange de chaleur, qui sont configurés pour échanger de la chaleur entre le fluide et une source froide qui est formée par l'air extérieur circulant à proximité du carter extérieur de la turbomachine ou bien qui est formée par un écoulement d'air extérieur dédié à cette fonction.

De nombreuses solutions ont été adoptées pour disposer l'échangeur de chaleur, notamment au niveau de l'entrée d'air de la turbomachine, comme décrit dans le document FR-A-2.958.974, dans lequel l'échangeur de chaleur est agencé dans la manche d'entrée d'air de la turbomachine. Les documents GB-626.571-A et EP-1.630.358-B divulguent aussi des solutions de l'art antérieur.

De telles solutions impliquent d'ajouter un composant à la turbomachine pour former l'échangeur de chaleur, c'est-à-dire d'augmenter la masse et la complexité de la turbomachine.

### EXPOSÉ DE L'INVENTION

L'invention a pour but de proposer un système échangeur de chaleur intégré à la structure générale de la turbomachine, qui joue également de rôle de système antigivrage de l'entrée d'air de la turbomachine.

Dans ce but, et conformément à la revendication 1, l'invention propose un système d'échange de chaleur dans une turbomachine comprenant une pluralité d'organes et équipements à refroidir et/ou à lubrifier, ledit système comprenant un circuit fluidique pour refroidir et/ou lubrifier lesdits équipements, ledit système d'échange de chaleur étant configuré pour mettre ledit circuit fluidique en contact thermique avec un fluide jouant le rôle de source froide d'autre part,
caractérisé en ce que le système d'échange de chaleur comporte une structure ajourée qui est en contact thermique avec au moins un tronçon chaud du circuit fluidique et qui est traversée radialement par un flux d'air d'admission de la turbomachine formant la source froide.

Cette structure ajourée utilisée pour réaliser le transfert de chaleur entre le fluide chaud et le flux d'air d'admission qui constitue la source froide, permet d'utiliser la chaleur prélevée au fluide chaud pour réchauffer la structure solide, afin d'éviter toute accrétion d'eau ou de cristaux de glace sur cette structure, qui auraient pu être amenés par le flux d'air admis lors d'un fonctionnement de la turbomachine dans des conditions givrantes.

Cela permet ainsi de combiner la fonction d'échange de chaleur en refroidissant le fluide de lubrification et/ou de refroidissement avec la fonction d'antigivrage à l'entrée d'air grâce à la température de la structure ajourée qui est supérieure à 0°C.

D'autres modes de réalisation préférés sont présentés dans les revendications dépendantes.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'un système d'échange de chaleur conforme à un premier mode de réalisation de l'invention ;
- la figure 2 est une vue similaire à celle de la figure 1, montrant un autre mode de réalisation de l'invention ;
- la figure 3 est une vue similaire à celle de la figure 1, montrant encore un autre mode de réalisation de l'invention.

### EXPOSÉ DÉTAILLÉ DE MODES DE RÉALISATION PARTICULIERS

On a représenté aux figures une partie d'un système d'échange de chaleur 10 pour une turbomachine configurée avec une entrée d'air radiale, par exemple une turbomachine d'aéronef.

La turbomachine comporte une pluralité de composants et organes qui s'échauffent lors du fonctionnement de la turbomachine, et qui ont besoin d'être refroidis ou d'être lubrifiés de manière continue.

Pour cela, la turbomachine comporte un circuit fluidique principal qui alimente tous les composants et organes de la turbomachine avec un fluide qui est apte à les lubrifier ou refroidir.

Le circuit fluidique principal est associé au système d'échange de chaleur 10 représenté aux figures, qui permet de refroidir le fluide qui a circulé au travers de ces composants et organes.

Le système d'échange de chaleur 10 comporte un circuit fluidique 12 qui est raccordé au circuit fluidique principal ou bien qui constitue celui-ci et il est configuré pour qu'un échange de chaleur puisse avoir lieu entre le fluide chaud et une source froide 14.

Pour cela, le système d'échange de chaleur 10 est configuré pour mettre en contact thermiquement le circuit fluidique 12 avec la source froide 14.

Ici, la source froide 14 consiste en un flux d'air, par exemple le flux d'air qui est admis dans la turbomachine. Ce flux d'air est à une température proche de la température extérieur ambiante, qui peut être très basse, surtout lorsque l'aéronef vole à haute altitude.

Pour céder de la chaleur vers le flux d'air 14 admis à partir du fluide du circuit fluidique 12, le système d'échange de chaleur 10 comporte une structure ajourée 16 comportant une pluralité d'ouvertures 15 qui sont traversées par le flux d'air 14 et qui est en contact thermique avec le fluide du circuit fluidique.

De préférence, la structure ajourée 16 du système d'échange de chaleur 10 est chauffée par le fluide chaud, ce qui empêche l'accrétion, ou l'accumulation de cristaux de glace sur celle-ci, au niveau de l'entrée d'air de la turbomachine, lorsque l'aéronef vole dans des conditions extérieures givrantes.

Ainsi, l'échange de chaleur entre le fluide chaud circulant dans le circuit fluidique 12 et le flux d'air traversant la structure ajourée 16 permet à la fois de refroidir le fluide et de réchauffer la structure ajourée 16 pour limiter l'accrétion de cristaux de glace.

Pour échanger de la chaleur avec le fluide, la structure ajourée 16 est conçue pour pouvoir être traversée par le fluide chaud.

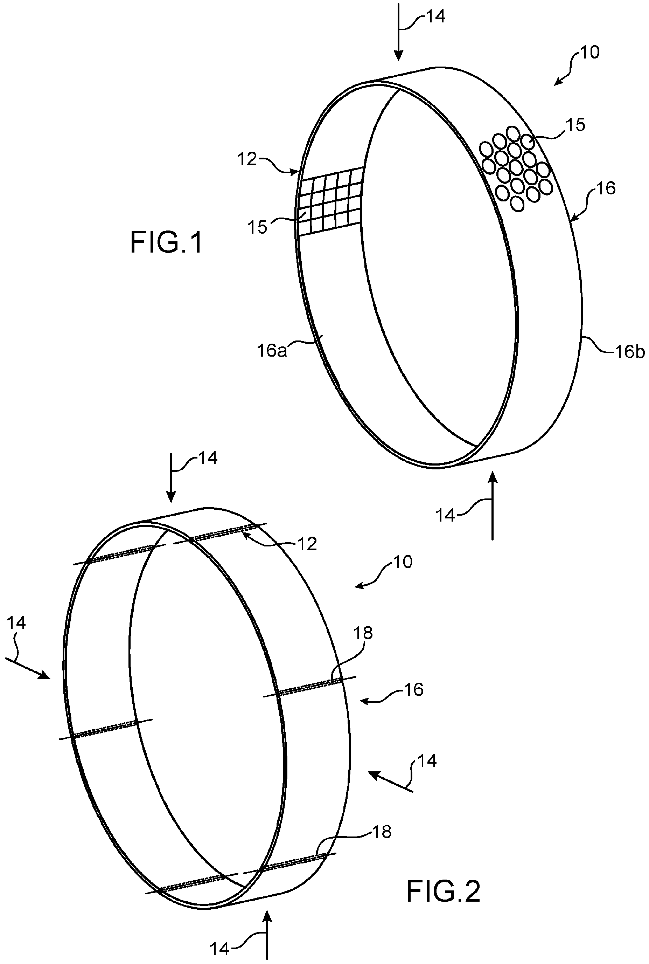

A cet effet, selon un premier mode de réalisation représenté à la figure 1, la structure ajourée 16 consiste en un élément creux, par exemple réalisée par l'assemblage de deux plaques elles-mêmes ajourées, qui est traversée par le fluide chaud.

Ici, la structure ajourée 16 est de forme cylindrique de révolution, et elle est raccordée au circuit fluidique 12 à ses deux extrémités axiales. Le flux d'air traverse la structure ajourée 16 radialement, par rapport à son axe principal A.

La structure ajourée 16 consiste en un assemblage de deux plaques ajourées cylindriques coaxiales dans lesquelles de ouvertures 15, dont la forme est par exemple circulaire ou rectangulaire.

La structure ajourée 16 peut consister en un système à double peau, dont la peau interne est en contact avec le fluide chaud et la peau externe en contact avec le flux d'air 14 admis.

Une première extrémité axiale 16a de la structure ajourée est ouverte et forme une entrée pour le fluide chaud, la deuxième extrémité axiale 16b de la structure ajourée 16 est elle aussi ouverte et forme une sortie pour le fluide refroidi.

Selon un autre mode de réalisation représenté à la figure 2, la structure ajourée 16 forme une grille qui est réalisée en partie à partir de tronçons 18 du circuit fluidique 12.

Ici aussi, la structure ajourée 16 est de forme cylindrique de révolution. Les tronçons 18 du circuit fluidique 12 sont tous parallèles à l'axe principal A de la structure ajourée 16 et ils sont répartis régulièrement ou non autour de l'axe principal A de la structure ajourée 16.

Les tronçons 18 du circuit fluidique 12 constituent des éléments structurels de la structure ajourée 16, de sorte que le transfert de chaleur s'effectue par conduction de chaleur avec les autres composants de la structure ajourée 16 et par échange de chaleur directement avec le flux d'air 14.

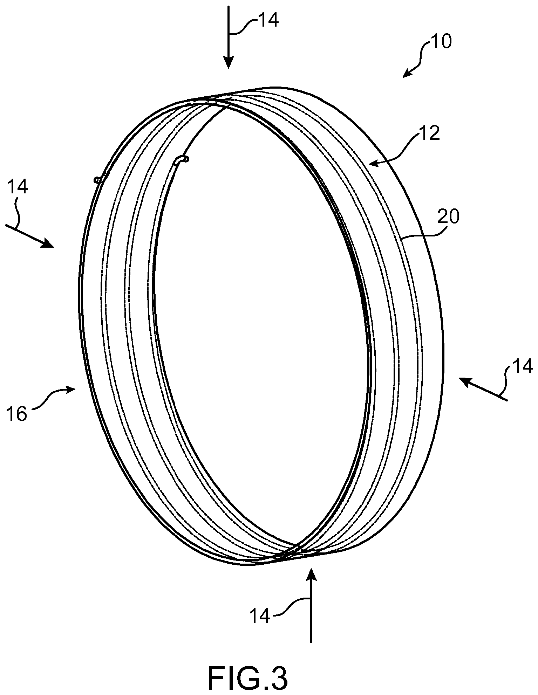

Selon une variante de réalisation, représentée à la figure 3, la structure ajourée 16 consiste en une grille et un tronçon 20 du circuit fluidique 12 forme un élément structurel de la structure ajourée 16. Ce tronçon 20 du circuit fluidique 12 est en forme d'un enroulement hélicoïdal coaxial à l'axe principal A de la structure ajourée 16. Selon une autre variante non représentée, la structure ajourée 16 comporte plusieurs tronçons 20 en forme d'enroulement hélicoïdal.

Il sera compris que l'invention n'est pas limitée à ces seuls modes de réalisation et que le système d'échange de chaleur 10 peut comporter une combinaison des modes de réalisation précédents.

Par exemple, le système d'échange de chaleur 10 peut comporter une structure ajourée 16 en forme de grille constituée à partir de tronçons 18 parallèles à l'axe principal de la structure ajourée 16 et à partir d'au moins un tronçon 20 de forme hélicoïdale.

Aussi, selon un mode de réalisation non représenté et qui ne fait pas partie de l'invention revendiquée, la structure ajourée 16 peut consister en une structure à double peau dont la peau externe est en contact avec le flux d'air 14 et qui comporte des tubes internes formés à partir de tronçons 18, 20 du circuit fluidique 12. Le transfert de chaleur entre la peau externe et les tubes interne s'effectuant par exemple par des ponts thermiques.

Aussi, selon un autre mode de réalisation non représenté et qui ne fait pas partie de l'invention revendiquée, la structure ajourée 16 est en forme d'un anneau plan, c'est-à-dire ayant une entrée d'air axiale. Selon ce mode de réalisation, le, ou les tronçons du circuit fluidique 12 constitutifs de la structure ajourée 16 sont soit des tronçons rectilignes orientés radialement par rapport à l'axe principal de la structure ajourée 16, ou bien un ou plusieurs tronçons en forme de spirale centrée sur l'axe principal de la structure ajourée 16.

Ou bien, lorsque la structure ajourée 16 en forme d'anneau plan consiste en un élément creux, elle est réalisée par l'assemblage de deux plaques ajourées planes parallèles et est ouverte à chacune de ses extrémités radiales interne et externe.

## Revendications

1. Système d'échange de chaleur (10) dans une turbomachine comprenant une pluralité d'organes et équipements à refroidir et/ou à lubrifier, ledit système comprenant un circuit fluidique (12) pour refroidir et/ou lubrifier lesdits équipements, ledit système d'échange de chaleur (10) étant configuré pour mettre ledit circuit fluidique (12) en contact thermique avec un fluide (14) jouant le rôle de source froide d'autre part,
le système d'échange de chaleur (10) comportant une structure ajourée (16) en forme d'une grille réalisée à partir de plusieurs tronçons du circuit fluidique qui sont répartis dans la structure ajourée et qui est traversée par un flux d'air (14) d'admission de la turbomachine formant la source froide,
**caractérisé en ce que** la structure ajourée est de forme cylindrique annulaire de révolution et est configurée pour être traversée radialement par le flux d'air (14) lors de l'utilisation.

2. Système d'échange de chaleur (10) selon la revendication précédente, **caractérisé en ce que** la structure ajourée (16) comporte plusieurs tronçons (18) du circuit fluidique (12) parallèles entre eux et parallèles à l'axe principal A de la structure ajourée (16).

3. Système d'échange de chaleur (10) selon l'une quelconque des revendications 1 ou 2, **caractérisé en ce que** la structure ajourée (16) comporte au moins un tronçon (20) du circuit fluidique (12) qui forme un enroulement sensiblement hélicoïdal coaxial à l'axe principal A de la structure ajourée (16).

## Patentansprüche

1. Wärmetauschsystem (10) in einer Turbomaschine, die eine Vielzahl von zu kühlenden und/oder zu schmierenden Organen und Einrichtungen umfasst, wobei das System einen Fluidkreis (12) zum Kühlen und/oder Schmieren der Einrichtungen umfasst, wobei das Wärmetauschsystem (10) konfiguriert ist, um den Fluidkreis (12) in thermischen Kontakt mit einem Fluid (14) zu bringen, welches anderswo als Kältequelle fungiert,
wobei das Wärmetauschsystem (10) eine durchbrochene Struktur (16) in Form eines Gitters beinhaltet, das aus mehreren Teilstücken des Fluidkreises realisiert ist, die in der durchbrochenen Struktur verteilt sind, und das von einem Einlassluftstrom (14) der Turbomaschine durchquert wird, der die Kältequelle bildet,
**dadurch gekennzeichnet, dass** die durchbrochene Struktur in einer ringförmigen zylindrischen Rotationsform ist, die konfiguriert ist, um bei Verwendung radial von dem Luftstrom (14) durchquert zu werden.

2. Wärmetauschsystem (10) nach dem vorstehenden Anspruch, **dadurch gekennzeichnet, dass** die durchbrochene Struktur (16) mehrere Teilstücke (18) des Fluidkreises (12) parallel zueinander und parallel zur Hauptachse A der durchbrochenen Struktur (16) beinhaltet.

3. Wärmetauschsystem (10) nach einem der Ansprüche 1 oder 2, **dadurch gekennzeichnet, dass** die durchbrochene Struktur (16) mindestens ein Teilstück (20) des Fluidkreises (12) beinhaltet, das eine zur Hauptachse A der durchbrochenen Struktur (16) koaxiale im Wesentlichen schneckenförmige Aufwicklung bildet.

## Claims

1. A heat exchange system (10) in a turbomachine comprising a plurality of members and equipment to be cooled and/or lubricated, the system comprising a fluid circuit (12) for cooling and/or lubricating said equipment, said heat exchange system (10) being configured to bring said fluid circuit (12) in thermal contact with a fluid (14) playing the role of a cold source on the other hand,
the heat exchange system (10) including a grid-shaped open work structure (16) made from several sections of the fluid circuit which are distributed in the open work structure and through which a turbomachine intake airflow (14) forming the cold source passes,
**characterized in that** the open work structure has a cylindrical shape and is designed to be radially passed through by the airflow (14) when operating.

2. The heat exchange system (10) according to the preceding claim, **characterized in that** the open work structure (16) includes several sections (18) of the fluid circuit (12) which are parallel to each other and parallel to the main axis A of the open work structure (16).

3. The heat exchange system (10) according to any of claims 1 or 2, **characterized in that** the open work structure (16) includes at least one section (20) of the fluid circuit (12) which forms a substantially helical winding coaxial to the main axis A of the open work structure (16).
